# EUROPEAN PATENT SPECIFICATION

(11) **EP 3 325 994 B1**
(45) Date of publication and mention of the grant of the patent: **07.07.2021**
(21) Application number: 16742431.6
(22) Date of filing: 14.07.2016
(51) Int. Cl.: G01S 5/02, H04W 4/02

(54) **SYSTEM, DEVICE, NODE, AND METHOD FOR TRACKING A DEVICE**
SYSTEM, VORRICHTUNG UND VERFAHREN ZUR VERFOLGUNG EINER VORRICHTUNG
SYSTÈME, DISPOSITIF, NOEUD, ET PROCÉDÉ DE SUIVI DE DISPOSITIF

(30) Priority: 21.07.2015 SE 1551033
(43) Date of publication of application: 30.05.2018
(73) Proprietor: NiDa Tech Sweden AB, 216 23 Malmö (SE)
(72) Inventor: DACKEFJORD, Håkan, 125 56 Älvsjö (SE); TAWS, Warwick, 168 34 Bromma (SE)
(74) Representative: Bergenstråhle & Partners AB
(86) International application number: PCT/SE2016/050718
(87) International publication number: WO 2017/014690

(56) References cited:
- WO-A1-2014/098760
- WO-A2-2005/062066
- WO-A2-2014/007754
- GB-A- 2 470 376
- US-A1- 2002 169 539
- US-A1- 2003 218 539
- US-A1- 2013 331 125

## Description

### Technical field

The present invention relates generally to a node for tracking a device, a device to be tracked by a node and a system thereof.

### Background art

In prior art there are many systems and solutions available for positioning of devices both for indoor and outdoor appliances. Examples are GPS, GLONASS, triangulation, roundtrip time measurements, and multiple radar solutions. Depending of the use each system is designed with different features in mind, for example power consumption, accuracy, and performance in different environments. GPS (Global Positioning System) is one of the most common systems available and provides a relatively good accuracy with a more or less worldwide coverage from satellites utilized for the system. Although great for outdoor positioning the GPS system has plenty of limitations both regarding coverage and power consumption. GPS systems and other similar systems such as GLONASS have difficulties both in large cities with tall buildings and indoor environments wherein the free view towards satellites is blocked or partly blocked. The problem is especially relevant for mobile devices both in indoor and outdoor areas that have limited battery capacity.

In prior art attempts to create other systems have resulted in other drawbacks, such as limited geographical coverage and bad accuracy.

Thus, it would be beneficial to provide a solution that addresses at least some of the aforementioned drawbacks

Documents WO2014098760, WO2014007754, US2002169539, US2003218539 disclose example of tracking system based on signal-strength measurements based on a one only distance comparison, which do not address drawbacks, such as limited geographical coverage and bad accuracy.

### Summary of invention

An object of the present invention is to provide a power efficient tracking system without compromising the geographical coverage.

Another object is to provide a security solution wherein a device is tracked based on the need of tracking it.

Yet another object is to arrange a solution and system allowing for dual power mode positioning and/or tracking of a device.

Thus, the solution relates to a node arranged for tracking a device, wherein the node is adapted to communicate through wireless communication in a frequency range between 300 and 1000 MHz and configured to transmit a position request to the device, receive a position response from the device, and calculate the distance to the device. The node is configured to determine a first maximum distance between the node and the device based on a predetermined signal strength threshold for distance calculations and transmit an alert to the device if the distance between the node and the device exceeds the first maximum distance.

It is one advantage with the present solution that it is adapted to communicate in a relatively low frequency range, i.e. between 300 and 1000 MHz. The low frequency range allows for enhanced coverage in areas with obstacles, such as walls or buildings. The reason for this is that frequencies in the range between 300 and 1000 MHz have better characteristics for penetrating building structures and other blocking objects than frequencies used for conventional data communication such as the WiFi frequencies 2.4 and 5 GHz. Furthermore, although the low frequencies limit the speed of data transfer, they allows for long distance communication in relation to the required energy level. Thereby, the solution provides good coverage for reasonably large coverage areas.

The node can be any form of node, such as an access point, base station, mobile phone, smartphone, or any other form of node. It is another advantage with the present solution that the node handles the majority of calculations and computation for the tracking or positioning determination. Thereby it is possible to increase the battery life of the device significantly.

It is one advantage that the node calculates a distance to the device and determines a first maximum distance based on a predetermined signal strength threshold for distance calculations. Although the transmission rate and data amount for determining the distance to a device is low there is a requirement for the signal strength and quality of the transmission in order for the distance to be calculated with an acceptable accuracy. An advantage with the present solution is that the acceptable signal strength is lower for data communication than for distance determination which is utilized for dual power mode positioning as will be described further herein.

According to an embodiment the node further is configured to determine a second maximum distance between the node and the device based on a predetermined signal strength threshold for data communication.

It is one advantage with the present solution that the node further is configured to determine a second maximum distance, the second maximum distance being based on a signal strength threshold for data communication. Thereby, the second maximum distance is a longer distance than the first maximum distance based on that the maximum distance for data communication without losing information is longer than the maximum distance for distance measurements without losing crucial accuracy.

According to an embodiment of the node the position request comprises a request to wake up the device.

It is one advantage with the present solution that the position request in one embodiment comprises a request to wake up the device. The device can be any form of device adapted to be tracked by a node including but not limited to a tag, puck, phone, PDA, or any other form of device. However, in one embodiment the device is a tag adapted to host a long life battery with low capacity. The long life battery is adapted to provide the device with energy for a long time lasting through low energy consumption by the device. It is thereby one advantage that the device can be in a sleep mode almost all the time except for when a position request is received comprising a request to wake up the device.

According to an embodiment the node is further configured to use the first and second maximum distances to create geographic areas surrounding the node.

In one embodiment of the node it is one advantage that the node is configured to create geographic areas surrounding the node. The geographic areas created from the first and second maximum distances constitutes a first and second geographic area wherein the first geographic area is a geographic area wherein a device can be tracked by a node utilizing a low power tracking option as described in the appended claims. The low power tracking is in one embodiment conducted by the node transmitting a position request to the device with the communication means communicating between 300 and 1000 MHz. The node further receives a response to the position request and uses the time of flight, ToA, RSSI, or any other form of in the art known positioning technology to determine the distance to the device.

The geographic area is in one embodiment used to create a map for the user illustrating the area wherein the device can be located without alerts being created by the node.

According to one embodiment the node is further configured to enable a user to set the first maximum distance manually as long as it is lower than the predetermined signal strength threshold distance for distance calculations.

In one embodiment it is advantageous for a user to be able to set the first geographic area or the first maximum distance in order to limit the area wherein the device is allowed to be without an alert being created. The person skilled in the art understands that the geographic area in one embodiment may have another form than a circle.

According to one embodiment the node further comprises means for determining the direction of the signal.

In one embodiment node sends multiple signal to determine the direction wherein the signal strength is the strongest and thereby determining the direction to the device.

In one embodiment multiple antennas are installed on the node to enable the node to determine the phase of the received signal at each of the said antennas, thereby enabling the direction to the device to be determined.

In one embodiment wherein the node is a mobile unit, the mobile unit adapted to instruct a user to rotate the device using his or her body as a shield affecting the signal strength and thereby enable determination of the direction to the device.

In one embodiment wherein the node is a mobile unit, the mobile unit is adapted to instruct a user to move in a zig-zag pattern to enable multiple distance calculations between the mobile unit and the device, thereby enabling the mobile unit to determine the direction to the device.

According to one embodiment the node is further configured to enable a user to manually draw a geographic area wherein the geographic area has a regular or unregularly shape.

It is one advantage with the present solution that a user has the possibility to set the first maximum distance manually in order to decrease an area wherein the device is allowed to be without transmitting an alert. It is further more an advantage that only the first maximum distance is configured manually by the user in order for the second maximum distance to be usable to save as much energy as possible.

According to one embodiment the node is a mobile node. According to one embodiment is the node a smartphone. According to yet another embodiment the node is any form of fixed node, such as a base station or access point, or mobile node such as a mobile phone, tablet, PDA, or any other form of mobile node.

According to an aspect a device is arranged to be tracked by a node. The device is adapted to communicate through wireless communication in a frequency range between 300 and 1000 MHz, receive a position request from the node, and transmit a position response to the node. The device is further adapted to enable positioning means comprised in the device upon receiving an alert that the device is beyond a first maximum distance between the node and the device based on a predetermined signal strength threshold for distance calculations.

In one embodiment of the device as described herein the device is in a passive mode for most of the time in order to enhance the battery life of the device.

In one embodiment of the device the device is adapted to wake up upon receiving a positioning request.

In one embodiment of the device the positioning means is GPS, GLONASS, WiFi, or any other form of positioning means adapted to position a device in an area that is not geographically predetermined.

According to an embodiment the device is adapted to use said positioning means only if the device is beyond a second maximum distance between the node and the device based on a predetermined signal strength threshold for data communication.

It is one advantage that the device saves power by only using the positioning means if the device is out of positioning reach of the node. In one embodiment is the device further configured to not use the communication means at 300 - 1000 MHz for communicating with the node if the device is outside of the first and second geographic areas or beyond the second maximum distance and thereby outside of reach from the node.

According to one embodiment the device is adapted to send positioning information through its communication means at 300-1000 MHz with position information from the positioning means if the device is in the geographical area or at a distance between the first and second maximum distance and thereby out of reach for positioning from the node but within communication distance with the node.

According to an embodiment the device is adapted to wake up upon receiving the position request from the node.

According to an embodiment the positioning means is GPS (Global Positioning System) positioning means.

According to an embodiment the device initiates a request to wake up the node.

According to an aspect a system for tracking a device comprises a node and a device where each of the node and the device is adapted to communicate through wireless communication in a frequency range between 300 and 1000 MHz, and
- the node calculates the distance to the device through exchanging data over said wireless communication,
- the node determines a first maximum distance between the node and the device based on a predetermined signal strength threshold for distance calculations,
- the node transmits an alert to the device if the distance between the node and the device exceeds the first maximum distance,
- the device comprises positioning means, and
- the device is adapted to enable said positioning means upon receiving an alert that the device is beyond a first maximum distance between the node and the device based on a predetermined signal strength threshold for distance calculations.

According to an embodiment the first and second maximum distances are used to create geographic areas surrounding the node.

It is one advantage with the system for tracking a device that the system creates two geographic areas surrounding the node. The first geographic area represents an area wherein the device can be tracked by the node through data communication at 300 - 1000 MHz as described herein and in the appended claims. The second geographic area represents an area wherein the node can communicate with the device but the signal strength is lower than a threshold value required to track the device accurately.

According to an aspect in a node for tracking a device, wherein the node is adapted to communicate through wireless communication in a frequency range between 300 and 1000 MHz, and
- transmitting a position request to the device,
- receiving a position response from the device,
- calculating the distance to the device,
- determining a first maximum distance between the node and the device based on a predetermined signal strength threshold for distance calculations, and
- transmitting an alert to the device if the distance between the node and the device exceeds the first maximum distance.

According to an aspect in a device to be tracked by a node, wherein the device is adapted to communicate through wireless communication in a frequency range between 300 and 1000 MHz, and
- receiving a position request from the node,
- transmitting a position response to the node,
the device further comprises positioning means and performs the step:
- enabling said positioning means upon receiving an alert that the device is beyond a first maximum distance between the node and the device based on a predetermined signal strength threshold for distance calculations.

According to an aspect a computer program, comprising computer readable code means, which when executed in a node causes the node to perform the solution as described herein.

According to an aspect a computer program, comprising computer readable code means, which when executed in a device causes the device to perform the solution as described herein.

According to an aspect a computer program product, comprising computer readable medium and a computer program wherein the computer program is stored on the computer readable medium.

According to an embodiment the communication through frequencies between 300 and 1000 MHz is conducted over an ISM (Industrial, scientific, and medical) band.

### Brief description of drawings

The invention is now described, by way of example, with reference to the accompanying drawings, in which:
Fig. 1 illustrates an embodiment of the system for tracking a device comprising a node and a device, wherein a first distance has been calculated and a geographic area created.
Fig. 2 illustrates an embodiment of the system for tracking a device comprising a node, wherein a first and second distance have been calculated.
Fig. 3 illustrates an embodiment of the system for tracking a device comprising a node and a device, wherein geographic areas have been created based on said first and second distance.
Fig. 4 illustrates an embodiment of the system for tracking a device comprising a node and multiple devices, wherein one device is inside the first geographic area, one is in the area between the boundaries of the first and second geographic area and one device is outside of the geographic areas with enabled positioning means.
Fig. 5 illustrates an embodiment of the system for tracking a device wherein the system comprises multiple interconnected nodes and multiple devices to be tracked.
Fig. 6 illustrates a schematic view of an embodiment of the tracking system comprising a node and a device.

### Description of embodiments

In the following, a detailed description of different embodiments of the node, device, method and, tracking system is disclosed under reference to the accompanying drawings. All examples herein should be seen as part of the general description and are therefore possible to combine in any way of general terms. Individual features of the various embodiments and aspects may be combined or exchanged unless such combination or exchange is clearly contradictory to the overall function of the disclosed node, device, method, and/or system.

Briefly, the solutions herein relates to a node, device, method and, tracking system enabled for dual power mode positioning wherein the node and device are adapted to enable positioning, distance calculations, and/or tracking of the device through at least two different means of positioning or distance calculations. The solution solves the problem of improving the battery life of a device to be tracked by utilizing a low power means to determine the approximate position of the device most of the time, with a second higher power means providing additional position information to enable a more exact determination of position of the device when required.

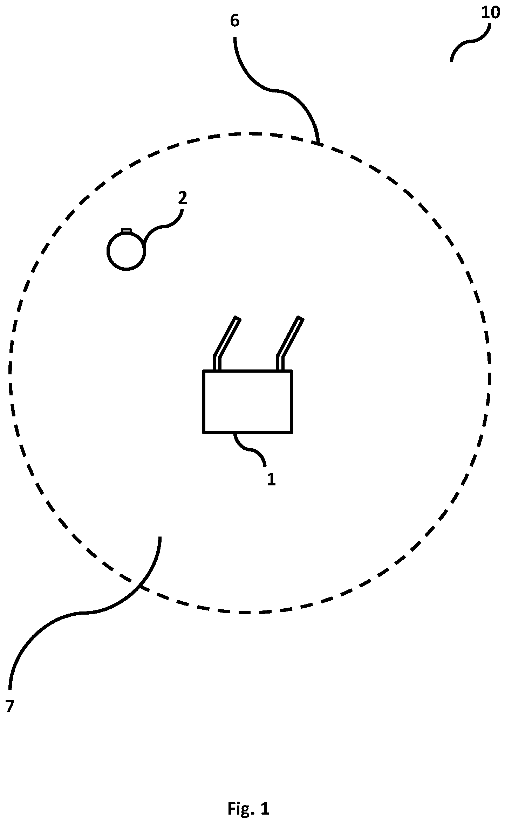

Figure 1 illustrates one embodiment of the tracking system, device, and node wherein a first geographic area 7 has been created based on a first maximum distance 6 calculated from a predetermined threshold value for signal strength. The first maximum distance 6 constitute the distance boundary for which the node 1 may successfully and with good accuracy track the distance to the device 2. In one embodiment is the first maximum distance 6 decided manually by a user. In another embodiment is the first maximum distance 6 means for creating a first geographic area 7, the first geographic area being drawn or created manually by a user. The person skilled in the art understands that the first geographic area 7 can be any form of geographic area 7 created automatically or by a user as long as the entire geographic area 7 is within the boundary created by the first maximum distance 6.

Figure 1 further illustrates a device 2 which is located within the first geographic area 7. The device 2 can be any type of device 2 including but not limited to a tag, puck, mobile device, smartphone, or any other form of device to be tracked. In one embodiment the device 2 is an embedded device 2 being part of another object, such as a bicycle, boat, jacket, or a power tool.

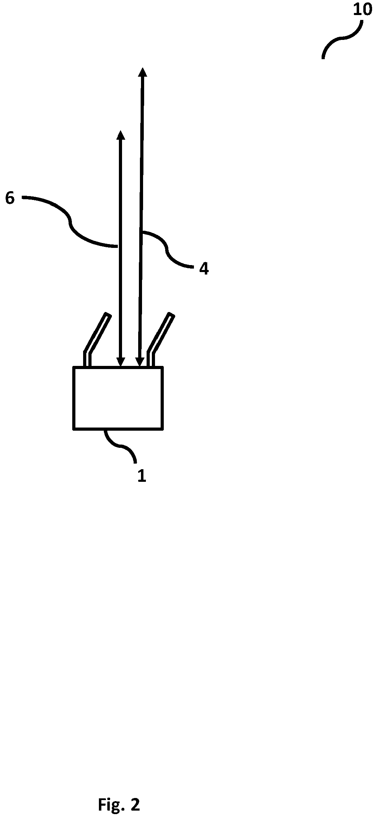

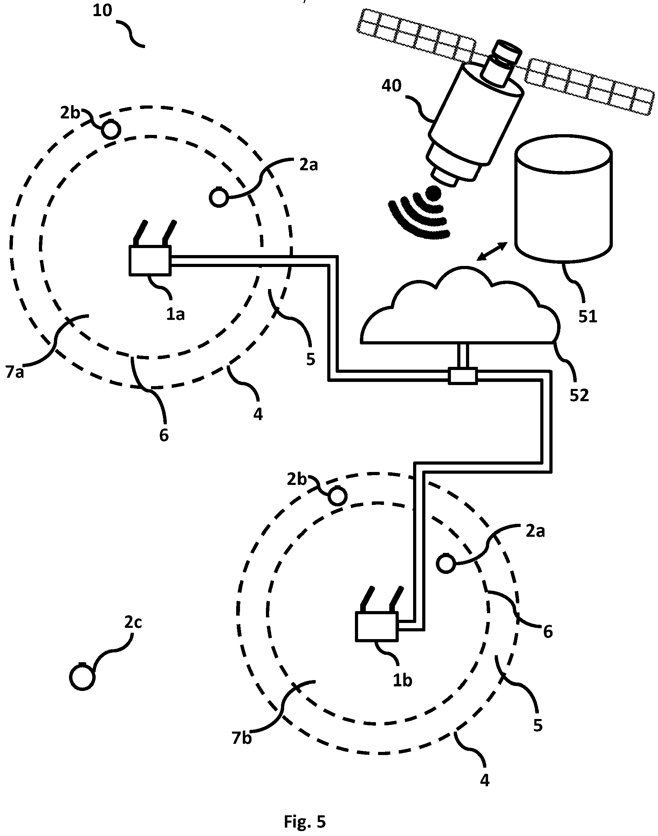

Figure 2 illustrates the first 6 and second 4 maximum distances from the node 1 in a system 10. The system 10 may comprise any number of nodes 1 and devices 2 as will be made clear in relation to figure 5 below.

The first 6 and second 4 maximum distances are in one embodiment not constant distances in relation to the distance to the node 1. For example, depending of the environment surrounding the node 1 the signal strength threshold might vary depending of objects in the way of the signal etc.

Figure 2 further illustrates the node 1 clearly. The node 1 can be any form of node 1, such as a mobile node, smartphone, base station, base unit, access point, or any other form of node suitable for the system 10.

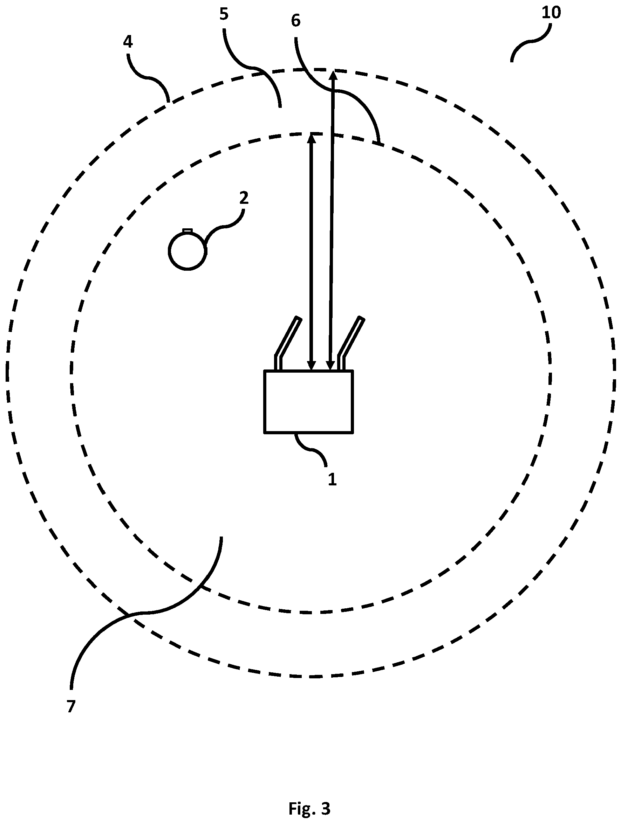

Figure 3 illustrates one embodiment of the system 10 comprising a node 1 and a device 2 wherein first 4 and second 6 maximum distances have been calculated by the node 1. Figure 3 further illustrates the first 7 and second 5 geographic areas. The first geographic area 7 is the area wherein the node 1 has coverage for calculating the distance to the node 1 with good accuracy. The second geographic area 5 is the area wherein the node 1 can communicate with the device 2. The area between the first 6 and second 4 maximum distances is the part of the second geographic area 5 wherein the node 1 can communicate with the device 2 but not accurately determine the distance to the device 2.

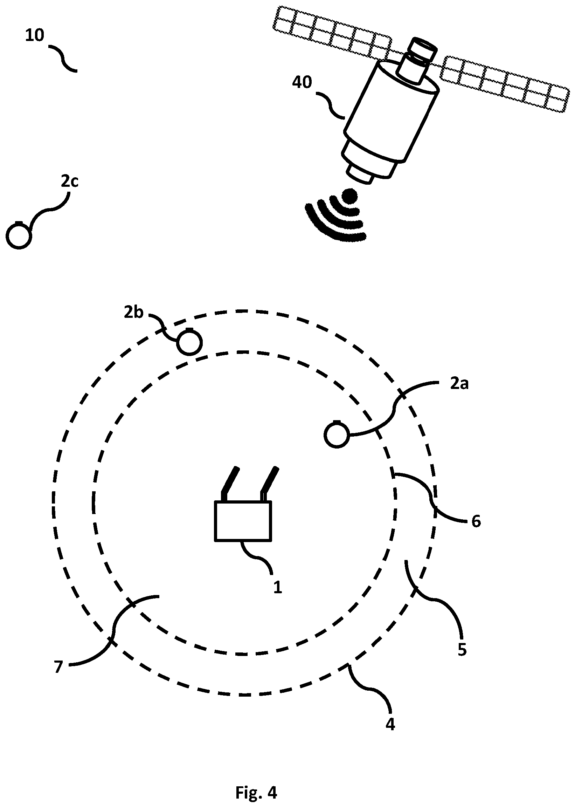

Figure 4 illustrates an embodiment of the system 10 wherein multiple devices 2a, 2b, 2c are present and the node 1 is adapted to track the devices 2a, 2b, 2c. The node 1 may in different embodiments of the solution as described herein be adapted to track any number of devices 2. The node 1 can successfully measure the distance to the device 2a and thereby also determine that the device 2a is within the first geographic area 7. The node 1 can further communicate with the device 2b but since the device 2b is located outside the first geographic area 7 the node can't determine the distance to the device 2b. The device 2c is outside of range for the node 1.

Figure 4 further illustrates a scenario of one embodiment of the solution wherein the device 2 is illustrated at different positions of the device 2a, 2b, 2c. The device 2 starts as the device 2a located within the first geographic area 7. The node 1 sends a position request and receives a response. Based on the transmitted request and the response the node 1 can successfully determine the position of the device 2a. The node 1 determines that the device 2a is within the first geographic area 7. The device 2a saves power by being in a passive mode except for when transmitting the response to the position request.

The device 2 moves outwards from the position of the device 2a to the position of the device 2b. The node 1 determines, for example through sending a position request or through only measuring the signal strength from the carrier wave, that the device 2b is outside of the first geographic area 7 but within the second geographic area 5. The node 1 sends an alert to the device 2a that the device 2a is outside of the first maximum distance 6. The device 2a receives the alert and activates its embedded or external positioning means communicating with another sources, such as a satellite 40. The device 2b can still transmit a response to the node 1 through its communication means over 300-1000 MHz.

The device 2 moves outwards from the position of the device 2b to the position of the device 2c and the device 2c is now out of range for the node 1. The device 2c is thereby out of the power saving mode and utilizes for example a satellite 40 to determine its position.

It is thereby one advantage with the present solution that the device 2b upon entering the intermediate zone between being in range for distance measurements by the node 1 and out of communication range with the node 1 may receive an alert activating positioning means in the device 2.

Figure 5 illustrates one embodiment of a system 10 comprising multiple nodes 1 and multiple device 2 to be tracked. The embodiment as illustrated in figure 5 comprises multiple nodes 1 that are interconnected through for example internet 52 or any other network 52 comprising storing means 51. Depending of the application area for the system 10 and/or the nodes 1 and devices 2 different configuration could be used in different embodiments of the solution.

According to one embodiment could for example the geographic areas be different sites of construction wherein power tools are supposed to be used. The geographic areas might be constrictions limiting the device 2 from leaving the areas 7 without an alert being created. Multiple connected areas 7a, 7b could correspond to different construction sites. Some device 2 could be allowed to be connected to both the first node 1a and the second node 1b, others could be limited to one of the areas 7a, 7b.

The device 2, nodes 1, and system 10 could be implemented in many other application areas as well and the example as presented above is merely one example. The person skilled in the art understands that any implementation could be used for the system 10. According to one embodiment could any number of nodes 1a, 1b be used and that multiple nodes 1a, 1b in one embodiment could have areas 7 overlapping each other allowing some devices 2 to be in both areas 7a, 7b, and other devices 2 to only be in one of the areas 7a, 7b.

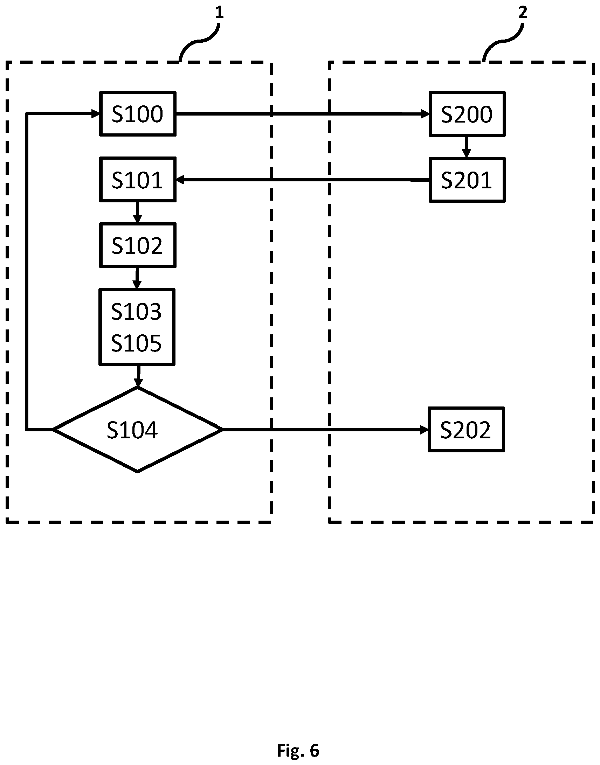

Figure 6 illustrates a schematic view of the steps conducted in one embodiment by the node 1 and device 2. The node 1 transmits S100 a position request to the device 2 which receives S200 the position request. The device 2 responds S201 with a response received S101 by the node 1. The node 1 calculates S102 the distance to the device 2 and determines S103 a first maximum distance. In one embodiment the node 1 further determines S105 a second maximum distance. If the distance determined S102 by the node 1 is longer than the determined S103 first maximum distance the node 2 transmits S104 an alert to the device 2.

## Claims

1. A node (1) arranged for tracking a device (2), wherein
the node is adapted to communicate through wireless communication in a frequency range between 300 and 1000 MHz, and configured to transmit a position request (S100) to the device (2), receive a position response (S101) from the device (2), and calculate (S102) the distance to the device (2), the node is configured to determine (S103) a first maximum distance (6) between the node (1) and the device (2) based on a predetermined signal strength threshold for distance calculations and transmit (S104) an alert to the device (2) if the distance between the node and the device (2) exceeds the first maximum distance (6), **characterized in that** the node is further configured to determine (S105) a second maximum distance (4) between the node (1) and the device (2) based on a predetermined signal strength threshold for data communication, wherein the second maximum distance (4) is longer than the first maximum distance (6) and the node is further configured to use the first (6) and second (4) maximum distances to create a first geographic area (7) and a second geographic area (5) surrounding the node (1), wherein the second geographic area (5) is a part of the area between the first (6) and second (4) maximum distances, wherein the position response is transmitted from the device (2) to the node (1) when the device (2) is in the second geographic area (5).

2. The node (1) according to claim 1, further configured to enable a user to set the first maximum distance (6) manually as long as it is lower than the predetermined signal strength threshold distance for distance calculations.

3. A device (2) arranged to be tracked by a node (1), according to any of claims 1-2, wherein the device (2) is adapted to communicate through wireless communication in a frequency range between 300 and 1000 MHz, receive (S200) a position request from the node (1), and transmit (S201) a position response to the node (1), the device (2) is adapted to enable (S202) positioning means comprised in the device (2) upon receiving an alert that the device (2) is beyond a first maximum distance (6) between the node (1) and the device (2) based on a predetermined signal strength threshold for distance calculations, **characterised in that** the device (2) is adapted to use said positioning means only if the device (2) is between the first maximum distance (6) and a second maximum distance (4) between the node (1) and the device (2) based on a predetermined signal strength threshold for data communication, wherein the second maximum distance (4) is longer than the first maximum distance (6).

4. The device (2) according to claim 3, wherein the device (2) initiate a request to wake up the node (1).

5. A system for tracking a device wherein the system comprises a node (1) and a device (2) where each of the node (1) and the device (2) is adapted to communicate through wireless communication in a frequency range between 300 and 1000 MHz, wherein the the node (1) is configured to transmit a position request (S100) to the device (2), receive a position response (S101) from the device (2), and calculate (S102) the distance to the device (2), and the device (2) is adapted to receive (S200) a position request from the node (1), and transmit (S201) a position response to the node (1),
- the node (1) calculates (S102) the distance to the device (2) through exchanging data (S100, S200, S201, S101) over said wireless communication,
- the node (1) determines (S103) a first maximum distance between the node (1) and the device (2) based on a predetermined signal strength threshold for distance calculations,
- the node (1) transmits an alert (S104) to the device (2) if the distance between the node and the device (2) exceeds the first maximum distance
**characterised in that**
- the node (1) determines (S105) a second maximum distance (4) between the node (1) and the device (2) based on a predetermined signal strength threshold for data communication wherein the second maximum distance (4) is longer than the first maximum distance (6),
- the node (1) uses the first (6) and second (4) maximum distances to create a first geographic area (7) and a second geographic area (5) surrounding the node (1), wherein the second geographic area (5) is a part of the area between the first (6) and second (4) maximum distances, - the device comprises positioning means,
- the device (2) is adapted to enable (S202) positioning means upon receiving the alert that the device (2) is between the first maximum distance and the second maximum distance, and
- the device (2) transmits the position response from the device (2) to the node (1) when the device (2) is in the second geographic area (5).

6. A method in a node (1) for tracking a device (2), 2. according to any of claims 3-4, wherein the node (1) is a node (1) according to any of claims 1-2, the method comprise:
- transmitting (S100) a position request to the device (2),
- receiving (S101) a position response from the device (2),
- calculating (S105) the distance to the device (2),
- determining (S103) a first maximum distance (6) between the node (1) and the device (2) based on a predetermined signal strength threshold for distance calculations,
- transmitting (S104) an alert to the device (2) if the distance between the node and the device (2) exceeds the first maximum distance (6)
wherein the method is **characterized in that** it further comprises:
- determining (S105) a second maximum distance between the node (1) and the device (2) based on a predetermined signal strength threshold for data communication wherein the second maximum distance is longer than the first maximum distance, and
- creating a first geographic area (7) and a second geographic area (5) surrounding the node (1) by using the first (6) and second (4) maximum distances, wherein the second geographic area (5) is a part of the area between the first (6) and second (4) maximum distances, wherein the position response is transmitted from the device (2) to the node (1) when the device (2) is in the second geographic area (5).

7. A method in a device (2) to be tracked by a node (1), according to any of claims 1-2, wherein the device (2) is adapted to communicate through wireless communication in a frequency range between 300 and 1000 MHz, receive (S200) a position request from the node (1), and transmit (S201) a position response to the node (1), a device according to any one of claims 3-4, and the method comprising:
- receiving a position request from the node (1),
- transmitting a position response to the node (1), the device (2) further comprises positioning means and performs the step:
- enabling said positioning means upon receiving an alert that the device (2) is beyond a first maximum distance (6) between the node (1) and the device (2) based on a predetermined signal strength threshold for distance calculations, **characterised in that** the device (2) further comprises the step only if the device (2) is between the first maximum distance (6) and a second maximum distance (4) between the node (1) and the device (2) based on a predetermined signal strength threshold for data communication wherein the second maximum distance (4) is longer than the first maximum distance (6).

8. A computer program, comprising computer readable code means, which when executed in a node (1) causes the node to perform the method according to claim 6, or when executed in a device (2) causes the device (2) to perform the method according to claim 7.

9. A computer program product, comprising computer readable medium and a computer program according to claim 8, wherein the computer program is stored on the computer readable medium.

## Patentansprüche

1. Knoten (1), der zum Nachführen einer Vorrichtung (2) angeordnet ist, wobei der Knoten dazu angepasst ist, durch drahtlose Kommunikation in einem Frequenzbereich zwischen 300 und 1000 MHz zu kommunizieren, und dazu konfiguriert ist, eine Positionsanfrage (S100) zu der Vorrichtung (2) zu senden, eine Positionsantwort (S101) von der Vorrichtung (2) zu empfangen und die Entfernung zu der Vorrichtung (2) zu berechnen (S102), wobei der Knoten dazu konfiguriert ist, basierend auf einer vorbestimmten Signalstärkeschwelle für Entfernungsberechnungen eine erste maximale Entfernung (6) zwischen dem Knoten (1) und der Vorrichtung (2) zu bestimmen (S103) und ein Warnsignal zu der Vorrichtung (2) zu senden (S104), wenn die Entfernung zwischen dem Knoten und der Vorrichtung (2) die erste maximale Entfernung (6) überschreitet, **dadurch gekennzeichnet, dass**
der Knoten weiter dazu konfiguriert ist, basierend auf einer vorbestimmten Signalstärkeschwelle für Datenkommunikation eine zweite maximale Entfernung (4) zwischen dem Knoten (1) und der Vorrichtung (2) zu bestimmen (S105), wobei die zweite maximale Entfernung (4) länger als die erste maximale Entfernung (6) ist, und der Knoten weiter dazu konfiguriert ist, die erste (6) und die zweite (4) maximale Entfernung zu verwenden, um einen ersten geographischen Bereich (7) und einen zweiten geographischen Bereich (5), die den Knoten (1) umgeben, zu erzeugen, wobei der zweite geographische Bereich (5) ein Teil des Bereichs zwischen der ersten (6) und der zweiten (4) maximalen Entfernung ist, wobei die Positionsantwort von der Vorrichtung (2) zu dem Knoten (1) gesendet wird, wenn sich die Vorrichtung (2) in dem zweiten geographischen Bereich (5) befindet.

2. Knoten (1) nach Anspruch 1, der weiter dazu konfiguriert ist, es einem Benutzer zu ermöglichen, die erste maximale Entfernung (6) manuell einzustellen, solange sie geringer als die Vorbestimmte-Signalstärkeschwelle-Entfernung für Entfernungsberechnungen ist.

3. Vorrichtung (2), die dazu angeordnet ist, von einem Knoten (1) nach einem der Ansprüche 1 bis 2 nachgeführt zu werden, wobei die Vorrichtung (2) dazu angepasst ist, durch drahtlose Kommunikation in einem Frequenzbereich zwischen 300 und 1000 MHz zu kommunizieren, eine Positionsanfrage von dem Knoten (1) zu empfangen (S200) und eine Positionsantwort zu dem Knoten (1) zu senden (S201), wobei die Vorrichtung (2) dazu angepasst ist, auf ein Empfangen eines Warnsignals, dass sich die Vorrichtung (2) jenseits einer auf einer vorbestimmten Signalstärkeschwelle für Entfernungsberechnungen basierenden ersten maximalen Entfernung (6) zwischen dem Knoten (1) und der Vorrichtung (2) befindet, ein in der Vorrichtung (2) enthaltenes Positionierungsmittel zu aktivieren (S202),
**dadurch gekennzeichnet, dass**
die Vorrichtung (2) dazu angepasst ist, das Positionierungsmittel nur dann zu verwenden, wenn sich die Vorrichtung (2) zwischen der ersten maximalen Entfernung (6) und einer auf einer vorbestimmten Signalstärkeschwelle für Datenkommunikation basierenden zweiten maximalen Entfernung (4) zwischen dem Knoten (1) und der Vorrichtung (2) befindet, wobei die zweite maximale Entfernung (4) länger als die erste maximale Entfernung (6) ist.

4. Vorrichtung (2) nach Anspruch 3, wobei die Vorrichtung (2) eine Anfrage, den Knoten (1) zu wecken, einleitet.

5. System zum Nachführen einer Vorrichtung, wobei das System einen Knoten (1) und eine Vorrichtung (2) umfasst, wobei jedes des Knotens (1) und der Vorrichtung (2) dazu angepasst ist, durch drahtlose Kommunikation in einem Frequenzbereich zwischen 300 und 1000 MHz zu kommunizieren, wobei der Knoten (1) dazu konfiguriert ist, eine Positionsanfrage (S100) zu der Vorrichtung (2) zu senden, eine Positionsantwort (S101) von der Vorrichtung (2) zu empfangen und die Entfernung zu der Vorrichtung (2) zu berechnen (S102), und die Vorrichtung (2) dazu angepasst ist, eine Positionsanfrage von dem Knoten (1) zu empfangen (S200) und eine Positionsantwort zu dem Knoten (1) zu senden (S201),
wobei der Knoten (1) die Entfernung zu der Vorrichtung (2) durch ein Austauschen von Daten (S100, S200, S201, S101) über die drahtlose Kommunikation berechnet,
wobei der Knoten (1) eine erste maximale Entfernung zwischen dem Knoten (1) und der Vorrichtung (2) basierend auf einer vorbestimmten Signalstärkeschwelle für Entfernungsberechnungen bestimmt (S103),
wobei der Knoten (1) ein Warnsignal (S104) zu der Vorrichtung (2) sendet, wenn die Entfernung zwischen dem Knoten und der Vorrichtung (2) die erste maximale Entfernung überschreitet,
**dadurch gekennzeichnet, dass**
der Knoten (1) eine zweite maximale Entfernung (4) zwischen dem Knoten (1) und der Vorrichtung (2) basierend auf einer vorbestimmten Signalstärkeschwelle für Datenkommunikation bestimmt (S105), wobei die zweite maximale Entfernung (4) länger als die erste maximale Entfernung (6) ist,
wobei der Knoten (1) die erste (6) und die zweite (4) maximale Entfernung verwendet, um einen ersten geographischen Bereich (7) und einen zweiten geographischen Bereich (5), die den Knoten (1) umgeben, zu erzeugen, wobei der zweite geographische Bereich (5) ein Teil des Bereichs zwischen der ersten (6) und der zweiten (4) maximalen Entfernung ist,
wobei die Vorrichtung ein Positionierungsmittel umfasst,
wobei die Vorrichtung (2) dazu angepasst ist, auf ein Empfangen des Warnsignals, dass sich die Vorrichtung (2) zwischen der ersten maximalen Entfernung und der zweiten maximalen Entfernung befindet, das Positionierungsmittel zu aktivieren (S202), und
wobei die Vorrichtung (2) die Positionsantwort von der Vorrichtung (2) zu dem Knoten (1) sendet, wenn sich die Vorrichtung (2) in dem zweiten geographischen Bereich (5) befindet.

6. Verfahren in einem Knoten (1) zum Nachführen einer Vorrichtung (2) nach einem der Ansprüche 3 bis 4, wobei der Knoten (1) ein Knoten (1) nach einem der Ansprüche 1 bis 2 ist, wobei das Verfahren umfasst:
Senden (S100) einer Positionsanfrage zu der Vorrichtung (2),
Empfangen (S101) einer Positionsantwort von der Vorrichtung (2),
Berechnen (S105) der Entfernung zu der Vorrichtung (2),
Bestimmen (S103) einer ersten maximalen Entfernung (6) zwischen dem Knoten (1) und der Vorrichtung (2) basierend auf einer vorbestimmten Signalstärkeschwelle für Entfernungsberechnungen,
Senden (S104) eines Warnsignals zu der Vorrichtung (2), wenn die Entfernung zwischen dem Knoten und der Vorrichtung (2) die erste maximale Entfernung (6) überschreitet,
wobei das Verfahren **dadurch gekennzeichnet ist, dass** es weiter umfasst:
Bestimmen (S105) einer zweiten maximalen Entfernung zwischen dem Knoten (1) und der Vorrichtung (2) basierend auf einer vorbestimmten Signalstärkeschwelle für Datenkommunikation, wobei die zweite maximale Entfernung länger als die erste maximale Entfernung ist, und
Erzeugen eines ersten geographischen Bereichs (7) und eines zweiten geographischen Bereichs (5), die den Knoten (1) umgeben, durch Verwenden der ersten (6) und der zweiten (4) maximalen Entfernung, wobei der zweite geographische Bereich (5) ein Teil des Bereichs zwischen der ersten (6) und der zweiten (4) maximalen Entfernung ist, wobei die Positionsantwort von der Vorrichtung (2) zu dem Knoten (1) gesendet wird, wenn sich die Vorrichtung (2) in dem zweiten geographischen Bereich (5) befindet.

7. Verfahren in einer Vorrichtung (2), die von einem Knoten (1) nach einem der Ansprüche 1 bis 2 nachzuführen ist, wobei die Vorrichtung (2) dazu angepasst ist, durch drahtlose Kommunikation in einem Frequenzbereich zwischen 300 und 1000 MHz zu kommunizieren, eine Positionsanfrage von dem Knoten (1) zu empfangen (S200) und eine Positionsantwort zu dem Knoten (1) zu senden (S201), wobei die Vorrichtung eine Vorrichtung nach einem der Ansprüche 3 bis 4 ist und wobei das Verfahren umfasst:
Empfangen einer Positionsanfrage von dem Knoten (1),
Senden einer Positionsantwort zu dem Knoten (1),
wobei die Vorrichtung (2) weiter ein Positionierungsmittel umfasst und den folgenden Schritt durchführt:
Aktivieren des Positionierungsmittels auf ein Empfangen eines Warnsignals, dass die Vorrichtung (2) jenseits einer auf einer vorbestimmten Signalstärkeschwelle für Entfernungsberechnungen basierenden ersten maximalen Entfernung (6) zwischen dem Knoten (1) und der Vorrichtung (2) ist, **dadurch gekennzeichnet, dass** die Vorrichtung (2) weiter den Schritt nur dann umfasst, wenn sich die Vorrichtung (2) zwischen der ersten maximalen Entfernung (6) und einer auf einer vorbestimmten Signalstärkeschwelle für Datenkommunikation basierenden zweiten maximalen Entfernung (4) zwischen dem Knoten (1) und der Vorrichtung (2) befindet, wobei die zweite maximale Entfernung (4) länger als die erste maximale Entfernung (6) ist.

8. Computerprogramm, umfassend ein computerlesbares Codemittel, das, wenn es in einem Knoten (1) ausgeführt wird, bewirkt, dass der Knoten das Verfahren nach Anspruch 6 durchführt, oder, wenn es in einer Vorrichtung (2) ausgeführt wird, bewirkt, dass die Vorrichtung (2) das Verfahren nach Anspruch 7 durchführt.

9. Computerprogrammprodukt, umfassend ein computerlesbares Medium und ein Computerprogramm nach Anspruch 8, wobei das Computerprogramm auf dem computerlesbaren Medium gespeichert ist.

## Revendications

1. Nœud (1) agencé pour suivre un dispositif (2), dans lequel le nœud est adapté pour communiquer par communication sans fil dans une plage de fréquences comprise entre 300 et 1000 MHz, et configuré pour transmettre une demande de position (S100) au dispositif (2), recevoir une réponse de position (S101) à partir du dispositif (2), et calculer (S102) la distance jusqu'au dispositif (2), le nœud est configuré pour déterminer (S103) une première distance maximale (6) entre le nœud (1) et le dispositif (2) sur la base d'un seuil d'intensité de signal prédéterminé pour des calculs de distances et transmettre (S104) une alerte au dispositif (2) si la distance entre le nœud et le dispositif (2) dépasse la première distance maximale (6), **caractérisé en ce que**
le nœud est en outre conçu pour déterminer (S105) une seconde distance maximale (4) entre le nœud (1) et le dispositif (2) sur la base d'un seuil d'intensité de signal prédéterminé pour une communication de données, dans lequel la seconde distance maximale (4) est plus longue que la première distance maximale (6) et le nœud est en outre configuré pour utiliser les première (6) et seconde (4) distances maximales afin de créer une première zone géographique (7) et une seconde zone géographique (5) entourant le nœud (1), dans lequel la seconde zone géographique (5) fait partie de la zone entre les première (6) et seconde (4) distances maximales, dans lequel la réponse de position est transmise du dispositif (2) au nœud (1) lorsque le dispositif (2) se trouve dans la seconde zone géographique (5).

2. Nœud (1) selon la revendication 1, configuré en outre pour permettre à un utilisateur de régler la première distance maximale (6) manuellement aussi longtemps qu'elle est inférieure à la distance de seuil d'intensité de signal prédéterminé pour des calculs de distances.

3. Dispositif (2) agencé pour être suivi par un nœud (1), selon l'une quelconque des revendications 1-2, dans lequel le dispositif (2) est adapté pour communiquer par communication sans fil dans une plage de fréquences comprise entre 300 et 1000 MHz, recevoir (S200) une demande de position à partir du nœud (1), et transmettre (S201) une réponse de position au nœud (1), le dispositif (2) est adapté pour activer (S202) des moyens de positionnement compris dans le dispositif (2) lors d'une réception d'une alerte selon laquelle le dispositif (2) est au-delà d'une première distance maximale (6) entre le nœud (1) et le dispositif (2) sur la base d'un seuil d'intensité de signal prédéterminé pour des calculs de distances, **caractérisé en ce que**
le dispositif (2) est adapté pour utiliser lesdits moyens de positionnement uniquement si le dispositif (2) se trouve entre la première distance maximale (6) et une seconde distance maximale (4) entre le nœud (1) et le dispositif (2) sur la base d'un seuil d'intensité de signal prédéterminé pour une communication de données, dans lequel la seconde distance maximale (4) est plus longue que la première distance maximale (6).

4. Dispositif (2) selon la revendication 3, dans lequel le dispositif (2) initie une demande pour réveiller le nœud (1).

5. Système pour suivre un dispositif dans lequel le système comprend un nœud (1) et un dispositif (2) où chacun du nœud (1) et du dispositif (2) est adapté pour communiquer par communication sans fil dans une plage de fréquences comprise entre 300 et 1000 MHz, dans lequel le nœud (1) est configuré pour transmettre une demande de position (S100) au dispositif (2), recevoir une réponse de position (S101) à partir du dispositif (2), et calculer (S102) la distance jusqu'au dispositif (2), et le dispositif (2) est adapté pour recevoir (S200) une demande de position à partir du nœud (1), et transmettre (5201) une réponse de position au nœud (1),
- le nœud (1) calcule (S102) la distance jusqu'au dispositif (2) par échange de données (S100, S200, S201, S101) sur ladite communication sans fil,
- le nœud (1) détermine (S103) une première distance maximale entre le nœud (1) et le dispositif (2) sur la base d'un seuil d'intensité de signal prédéterminé pour des calculs de distances,
- le nœud (1) transmet une alerte (S104) au dispositif (2) si la distance entre le nœud et le dispositif (2) dépasse la première distance maximale,
**caractérisé en ce que**
- le nœud (1) détermine (S105) une seconde distance maximale (4) entre le nœud (1) et le dispositif (2) sur la base d'un seuil d'intensité de signal prédéterminé pour une communication de données, dans lequel la seconde distance maximale (4) est plus longue que la première distance maximale (6),
- le nœud (1) utilise les première (6) et seconde (4) distances maximales pour créer une première zone géographique (7) et une seconde zone géographique (5) entourant le nœud (1), dans lequel la seconde zone géographique (5) fait partie de la zone entre les première (6) et seconde (4) distances maximales,
- le dispositif comprend des moyens de positionnement,
- le dispositif (2) est adapté pour activer (S202) des moyens de positionnement lors d'une réception de l'alerte selon laquelle le dispositif (2) se trouve entre la première distance maximale et la seconde distance maximale, et
- le dispositif (2) transmet la réponse de position du dispositif (2) au nœud (1) lorsque le dispositif (2) se trouve dans la seconde zone géographique (5).

6. Procédé dans un nœud (1) pour suivre un dispositif (2) selon l'une quelconque des revendications 3-4, dans lequel le nœud (1) est un nœud (1) selon l'une quelconque des revendications 1-2,
le procédé comprend les étapes consistant à :
- transmettre (S100) une demande de position au dispositif (2),
- recevoir (S101) une réponse de position à partir du dispositif (2),
- calculer (S105) la distance jusqu'au dispositif (2),
- déterminer (S103) une première distance maximale (6) entre le nœud (1) et le dispositif (2) sur la base d'un seuil d'intensité de signal prédéterminé pour des calculs de distances,
- transmettre (S104) une alerte au dispositif (2) si la distance entre le nœud et le dispositif (2) dépasse la première distance maximale (6),
dans lequel le procédé est **caractérisé en ce qu'**il comprend en outre les étapes consistant à :
- déterminer (S105) une seconde distance maximale entre le nœud (1) et le dispositif (2) sur la base d'un seuil d'intensité de signal prédéterminé pour une communication de données, dans lequel la seconde distance maximale est plus longue que la première distance maximale, et
- créer une première zone géographique (7) et une seconde zone géographique (5) entourant le nœud (1) en utilisant les première (6) et seconde (4) distances maximales, dans lequel la seconde zone géographique (5) fait partie de la zone entre les première (6) et seconde (4) distances maximales, dans lequel la réponse de position est transmise du dispositif (2) au nœud (1) lorsque le dispositif (2) se trouve dans la seconde zone géographique (5).

7. Procédé dans un dispositif (2) devant être suivi par un nœud (1), selon l'une quelconque des revendications 1-2, dans lequel le dispositif (2) est conçu pour communiquer par une communication sans fil dans une plage de fréquences comprise entre 300 et 1000 MHz, recevoir (S200) une demande de position à partir du nœud (1), et transmettre (S201) une réponse de position au nœud (1), un dispositif selon l'une quelconque des revendications 3-4, et le procédé comprenant les étapes consistant à :
- recevoir une demande de position à partir du nœud (1),
- transmettre une réponse de position au nœud (1),
le dispositif (2) comprend en outre des moyens de positionnement et effectue l'étape consistant à :
- activer ledit moyen de positionnement lors de la réception d'une alerte selon laquelle le dispositif (2) est au-delà d'une première distance maximale (6) entre le nœud (1) et le dispositif (2) sur la base d'un seuil d'intensité de signal prédéterminé pour des calculs de distances, **caractérisé en ce que** le dispositif (2) comprend en outre l'étape uniquement si le dispositif (2) est entre la première distance maximale (6) et une seconde distance maximale (4) entre le nœud (1) et le dispositif (2) sur la base d'un seuil d'intensité de signal prédéterminé pour une communication de données dans laquelle la seconde distance maximale (4) est plus longue que la première distance maximale (6).

8. Programme informatique, comprenant des moyens de code lisible par ordinateur qui, lorsqu'ils sont exécutés dans un nœud (1), amènent le nœud à exécuter le procédé selon la revendication 6,
ou lorsqu'ils sont exécutés dans un dispositif (2), amènent le dispositif (2) à exécuter le procédé selon la revendication 7.

9. Produit de programme informatique, comprenant un support lisible par ordinateur et un programme informatique selon la revendication 8, dans lequel le programme informatique est stocké sur le support lisible par ordinateur.
